# EUROPÄISCHE PATENTSCHRIFT

(11) **EP 3 403 749 B1**
(45) Veröffentlichungstag und Bekanntmachung des Hinweises auf die Patenterteilung: **21.01.2026**
(21) Anmeldenummer: 18000450.9
(22) Anmeldetag: 14.05.2018
(51) Int. Cl.: B23B 31/30, F16C 19/06, F16C 35/073, F16C 35/078, F16C 35/12

(54) **GEGENLAGER FÜR EINE BEARBEITUNGSSPINDEL EINER BEARBEITUNGSMASCHINE UND VERFAHREN ZUM SPANNEN EINES GEGENLAGERS**
COUNTERBEARING FOR A MACHINING SPINDLE OF A MACHINE TOOL AND METHOD OF CLAMPING A COUNTERBEARING
BUTÉE POUR UNE BROCHE D'USINAGE D'UNE MACHINE D'USINAGE ET PROCÉDÉ DE SERRAGE DE BUTÉE

(30) Priorität: 17.05.2017 DE 102017004994
(43) Veröffentlichungstag der Anmeldung: 21.11.2018
(73) Patentinhaber: Michael Weinig AG, 97941 Tauberbischofsheim (DE)
(72) Erfinder: WAGNER, Ralf, 74736 Hardheim (DE); GRAMLICH, Rainer, 74747 Ravenstein (DE)
(74) Vertreter: Kohl, Karl-Heinz

(56) Entgegenhaltungen:
- WO-A1-2017/050805
- DE-A1- 4 012 980
- DE-A1- 4 224 872
- DE-B1- 2 424 593
- KR-B1- 101 594 627
- US-A- 4 533 287

## Beschreibung

Die Erfindung betrifft ein Gegenlager zur drehbaren Lagerung einer Bearbeitungsspindel einer Bearbeitungsmaschine nach dem Oberbegriff des Anspruches 1 sowie ein Verfahren zum Spannen eines Gegenlagers auf einer Bearbeitungsspindel einer Bearbeitungsmaschine nach dem Oberbegriff des Anspruches 12.

Zum Spannen von Gegenlagern auf Spindeln sind Spanneinrichtungen bekannt, die mit Dehnbuchsen versehen sind. Sie weisen jeweils eine elastisch verformbare Wand auf, die eine ringförmige Druckkammer begrenzt. In die Druckkammern wird ein Druckmedium, vorzugsweise Fett, mit Druck eingebracht. Soll das Gegenlager auf der Spindel gespannt werden, wird an einen entsprechenden Anschluss eine Hochdruckfettpresse angeschlossen, mit der das Fett in die Druckkammer mit hohem Druck gepumpt wird. Zum Lösen der Spannung wird ein Ventil geöffnet, über das ein Teil des Fettes abgelassen wird. Mit einer solchen Spanneinrichtung ist ein sauberes Arbeiten nicht möglich. Das Fett gelangt nicht nur beim Spannvorgang, sondern auch beim Lösevorgang nach außen und führt zu einer Verschmutzung. Zudem ist der Einsatz einer Hochdruckfettpresse zum Spannen des Gegenlagers auf der Spindel sehr aufwändig.

Der Erfindung liegt die Aufgabe zugrunde, das gattungsgemäße Gegenlager und das gattungsgemäße Verfahren so auszubilden, dass ein einfacher, zuverlässiger und sauberer Spann- sowie Lösevorgang möglich ist.

Diese Aufgabe wird beim gattungsgemäßen Gegenlager erfindungsgemäß mit den kennzeichnenden Merkmalen des Anspruches 1 und beim gattungsgemäßen Verfahren erfindungsgemäß mit den kennzeichnenden Merkmalen des Anspruches 12 gelöst.

Das erfindungsmäße Gegenlager zeichnet sich durch ein geschlossenes System zum Spannen aus. Um das Druckmedium für den Spannvorgang unter Druck zu setzen, wird das Druckelement mittels eines Werkzeuges mechanisch betätigt, wodurch ein Kolben in Richtung auf die Druckkammer verschoben wird und das darin befindliche Druckmedium unter Druck setzt. Dadurch ist eine einfache und schnelle Spannung ohne Verwendung einer Fettpresse mit einem einfachen Werkzeug, wie beispielsweise einem Inbusschlüssel, möglich.

Vorteilhaft sitzt das Druckelement in einer Gewindebohrung. Dadurch ist es möglich, das Druckelement stufenlos mit dem Werkzeug so zu drehen, dass der erforderliche Spanndruck erreicht wird. Soll die Spannung gelöst werden, wird das Druckelement zurückgedreht, wodurch der Kolben ebenfalls zurückgefahren und der auf das Druckmedium wirkende Druck verringert wird.

Bei einer konstruktiv sehr einfachen Ausführungsform wird das Druckelement durch einen Gewindestift gebildet, der in die Gewindebohrung geschraubt ist.

Damit das Druckmedium in der Druckkammer zuverlässig unter Druck gesetzt werden kann, ist der Kolben in einem Kolbenraum abgedichtet verschiebbar.

Vorteilhaft ist die Druckkammer mit einer Druckanzeige leitungsverbunden. Dadurch kann der Benutzer beim Einstellen des Spanndruckes sehr einfach feststellen, ob der notwenige Spanndruck erreicht wird.

Die Druckanzeige weist in vorteilhafter Weise einen Stößel auf, der in einer in die Druckkammer mündenden Bohrung sitzt und abgedichtet in der Bohrung verschiebbar ist. Wird das Druckmedium mittels des Druckelementes in der Druckkammer unter Druck gesetzt, drückt das Medium auf die Stirnseite des Stößels, der als Kolben wirkt und der entsprechend dem aufgebrachten Druck verschoben wird. Dadurch kann über die Lage des Stößels sehr einfach festgestellt werden, ob der erforderliche Spanndruck erreicht ist.

Der Stößel ist vorteilhaft in Richtung auf die Druckkammer federbelastet. Infolge der Federbelastung nimmt der Stößel, wenn das Druckmedium nicht unter Druck gesetzt ist, eine Ausgangsstellung ein. Beim Spannvorgang wird der Stößel gegen die Federbelastung verschoben, bis Kräftegleichgewicht zwischen der Kolbenkraft und der Federkraft herrscht.

Vorteilhaft ist der Stößel von einem Tellerfederpaket umgeben. Es stützt sich mit dem einen Ende an einem stößelseitigen Anschlag und mit dem anderen Ende an einem Sicherungsteil ab. Da zum Spannen sehr hohe Drücke erforderlich sind, beispielsweise etwa 300 bar, ermöglicht das Tellerfederpaket entsprechend hohe, auf den Stößel in Richtung auf die Druckkammer wirkende Federkräfte.

Das Sicherungsteil zur Abstützung des Tellerfederpaketes ist bei einer konstruktiv einfachen Ausbildung eine Gewindehülse, die in eine Gewindebohrung geschraubt ist. Die Gewindehülse hat eine Durchgangsöffnung, in die der Stößel ragt. Für den Benutzer ist es auf diese Weise sehr einfach möglich, die Lage des Stößels in der Gewindehülse festzustellen. Die Abstimmung der Federkraft, insbesondere einer Tellerfederkraft, und die vom Druckmedium ausgeübte Kolbenkraft werden in vorteilhafter Weise so gewählt, dass bei Erreichen der Spannkraft die Stirnseite des Stößels in Höhe der Stirnseite der Gewindehülse liegt. Diese Lage des Stößels, der in der Ausgangsstellung noch innerhalb der Gewindehülse liegt, kann vom Benutzer zuverlässig erkannt werden.

Die Dehnbuchse ist erfindungsgemäß in einer Lagernabe des Gegenlagers angeordnet.

Das geschlossene System ermöglicht ein sauberes und zuverlässiges Spannen der Lagernabe des Gegenlagers auf der Spindel.

Für die Erstbefüllung der Druckkammer ist die Spanneinrichtung mit einem Anschluss versehen, über den das Druckmedium in die Drucckammer eingebracht werden kann.

Vorteilhaft ist die Druckkammer mit einem Druckablassventil leitungsverbunden.

Beim erfindungsgemäßen Verfahren erfolgt zunächst eine Erstbefüllung mit dem Druckmedium. Auf diese Weise wird ein geschlossenes Spannsystem erhalten, mit dem ein Gegenlager anschließend einfach dadurch gespannt werden kann, dass das Druckmedium mittels des Kolbens mechanisch unter Druck gesetzt wird. Der Kolben wird hierbei durch ein Druckelement verschoben, um das Druckmedium unter den entsprechenden Druck zu setzen. Mit der Druckanzeige wird hierbei die Einstellung des Spanndruckes angezeigt und kann damit vom Anwender kontrolliert bzw. überwacht werden. Soll die Spannung aufgehoben werden, wird das Druckelement lediglich mechanisch in umgekehrter Richtung bewegt, so dass der Kolben unter dem Druck des Druckmediums zurückgeschoben wird.

Vorteilhaft wird als Druckelement ein Schraubteil, wie ein Gewindestift, verwendet. Mit ihm kann der Kolben stufenlos verschoben werden, so dass der Spanndruck exakt eingestellt werden kann. Zum Betätigen des Schraubteiles ist nur ein einfaches Werkzeug, wie beispielsweise ein Inbusschlüssel, erforderlich.

Als Druckanzeige wird vorteilhaft ein Stößel verwendet, der als ein durch das Druckmedium belasteter Kolben wirkt, der gegen Federkraft durch das Druckmedium beim Spannvorgang verschoben wird. Die Federkraft sorgt auch dafür, dass der Stößel beim Lösen der Spannung wieder zurückgeschoben wird.

Die Erfindung wird nachstehend anhand eines in den Zeichnungen dargestellten Ausführungsbeispieles näher erläutert. Es zeigen
- Fig. 1: eine Stirnansicht eines erfindungsgemäßen Gegenlagers mit einer Spanneinrichtung,
- Fig. 2: einen Schnitt längs der Linie A - A in Fig.1,
- Fig. 3: einen Schnitt längs der Linie B - B in Fig. 1,
- Fig. 4: die Einzelheit C in Fig. 2 in vergrößerter Darstellung.

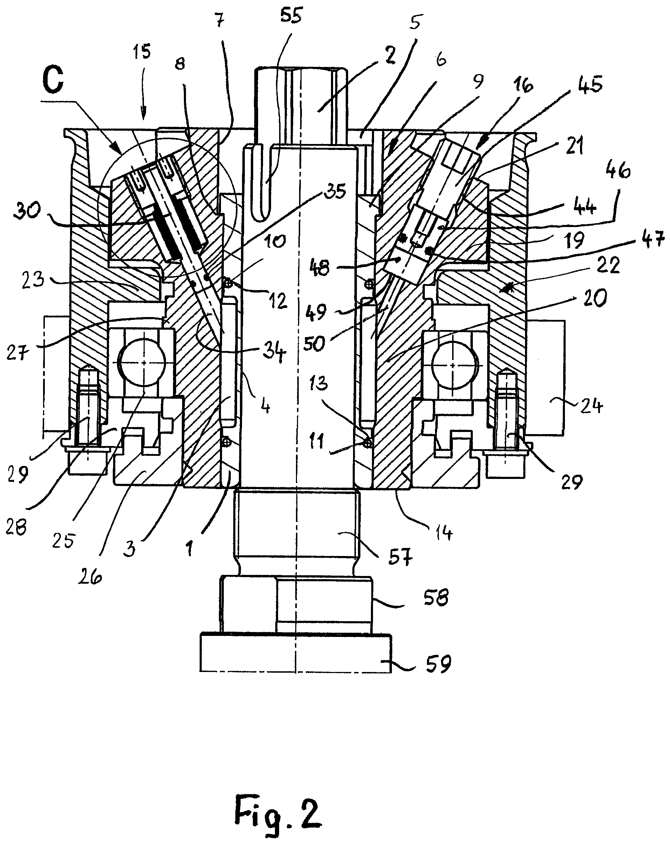

Die Spanneinrichtung ist im dargestellten Ausführungsbeispiel Teil eines Gegenlagers, das eine spielfreie und zentrische Verbindung mit der Spindel ermöglicht. Es hat eine Hydrodehnbuchse 1 (Fig. 2), die einen Spindelzapfen 2 umgibt. Die Hydrodehnbuchse 1 ist mit einer Druckkammer 3 versehen, die sich über einen Teil der Länge und über den Umfang der Hydrodehnbuchse 1 erstreckt. Radial nach innen wird die Druckkammer 3 von einem dünnwandigen Bereich 4 der Hydrodehnbuchse 1 begrenzt, der unter dem Druck eines in der Druckkammer befindlichen Druckmediums radial elastisch nach innen verformt werden kann, um den Spindelzapfen zu spannen.

Die Hydrodehnbuchse 1 ist in einer Durchgangsöffnung 5 einer Lagernabe 6 untergebracht. Die Durchgangsöffnung 5 wird von einer Wand 7 begrenzt, die mit einer Ringschulter 8 versehen ist, an der die Hydrodehnbuchse 1 in einer Achsrichtung abgestützt ist. Hierzu ist die Hydrodehnbuchse 1 an einem Ende mit einem vorstehenden Radialflansch 9 versehen, mit dem die Hydrodehnbuchse 1 an der Ringschulter 8 axial abgestützt ist. Beiderseits der ringförmigen Drucckammer 3 befinden sich Dichtringe 10, 11, vorzugsweise O-Ringe, die in Ringnuten 12, 13 am Außenumfang der Hydrodehnbuchse 1 eingelegt sind und die Abdichtung zwischen der Hydrodehnbuchse und der Lagernabe 6 gewährleisten.

Die Druckkammer 3 ist ausreichend lang, um den Spindelzapfen 2 sicher spannen zu können. Er ragt mit seinen beiden Enden über die Lagernabe 6 vor und weist an seinem in Fig. 2 unteren Ende ein Gewinde 57 für die Spindelmutter und einen Teilbereich 58 für einen Sicherungsring auf. Erkennbar ist auch ein Teil einer Werkzeugaufnahme 59.

Die Hydrodehnbuchse 1 schließt mit ihrem einen Ende bündig mit einer Außenseite 14 der Lagernabe 6 ab, während das andere, den Radialflansch 9 aufweisende Ende innerhalb der Durchgangsöffnung 5 liegt.

Die Lagernabe 6 ist mit einer Druckanzeige 15 und einem Druckerzeuger 16 versehen, mit dem das in der Druckkammer 3 befindliche Druckmedium unter Druck gesetzt werden kann.

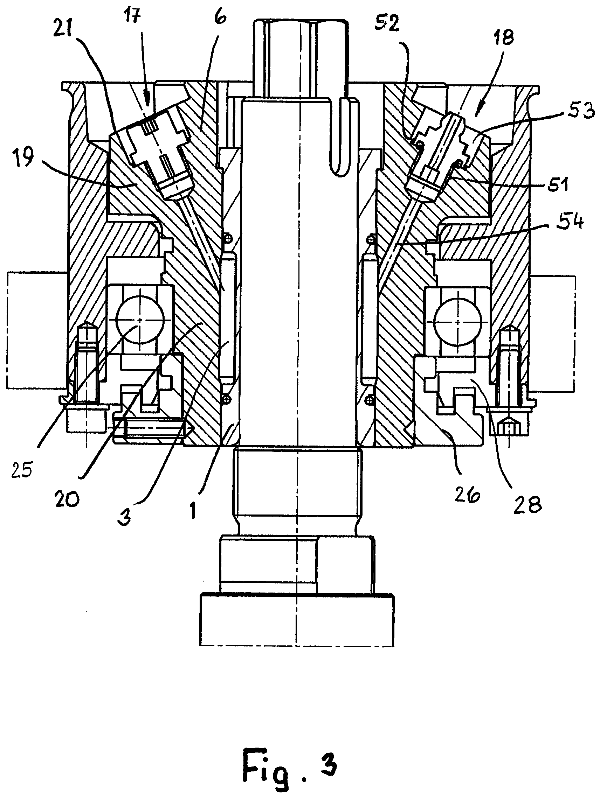

Die Lagernabe 6 ist außerdem mit einem Ventil 17 für die Entlüftung bei der Erstbefüllung mit Druckmedium und für den Druckablass in der Druckkammer 3 und mit einem Anschluss 18 versehen (Fig. 3), über den das Druckmedium in die Druckkammer 3 gefüllt wird.

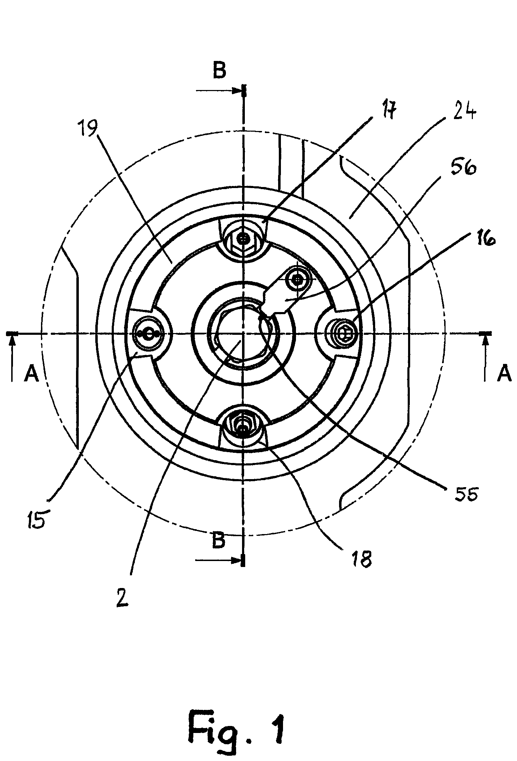

Wie aus Fig. 1 hervorgeht, liegen die Druckanzeige 15, der Druckerzeuger 16, das Druckablassventil 17 und der Anschluss 18 vorteilhaft um 90° versetzt zueinander an der einen Stirnseite der Lagernabe 6. Je nach Gestaltung der Lagernabe 6 können diese Teile 15 bis 18 auch an anderer Stelle und in anderer Verteilung an der Lagernabe 6 vorgesehen sein.

Die Lagernabe 6 ist im Bereich der Teile 15 bis 18 vorteilhaft verbreitert ausgebildet, so dass ausreichend Einbauraum für diese Teile zur Verfügung steht. Die Verbreiterung wird durch einen Ringflansch 19 gebildet, der nahe dem einen Ende der Lagernabe 6 vorgesehen ist und radial von einem buchsenförmigen Grundkörper 20 der Lagernabe absteht. Der Grundkörper 20 weist die Durchgangsöffnung 5 zur Aufnahme der Hydrodehnbuchse 1 auf.

Die Lagernabe 6 ist von einer Schiebebuche 22 umgeben, die die Lagernabe 6 nahezu über deren gesamte Länge umgibt. Die Schiebebuchse 22 ist innenseitig mit einem radial vorstehenden Ring 23 versehen, mit dem die Schiebebuchse 22 den Ringflansch 19 der Lagernabe 6 hintergreift. Die Schiebebuchse 22 ist im Ausführungsbeispiel an einer Aufnahmeplatte 24 axial verschiebbar gehalten und wird bei einer Axialverstellung der Spindel mit dieser axial mitbewegt. Die Aufnahmeplatte 24 wird vorteilhaft an einer Gegenlagerplatte befestigt, welche wiederum am Maschinenständer angeordnet ist.

Auf der von den Teilen 15 bis 18 abgewandten Seite des Ringes 23 befindet sich wenigstens ein Drehlager 25, das im Ausführungsbeispiel als Wälzlager ausgebildet ist. Mit dem Drehlager 25 ist die Lagernabe 6 drehbar in der Schiebebuchse 22 gelagert.

Das Drehlager 25 wird mittels eines Spannringes 26 gegen eine Ringschulter 27 an der Außenseite des Grundkörpers 20 axial gespannt. Der Spannring 26 wird auf das in den Fig. 2 und 3 untere Ende des Grundkörpers 20 der Lagernabe 6 geschoben und mit einem Gewindestift 60 darauf gesichert.

Zwischen dem Spannring 26 und dem Drehlager 25 liegt ein Dichtring 28, dessen äußerer Rand mit Schrauben 29 an der Stirnseite der Schiebebuchse 22 befestigt ist. Der Dichtring 28 und der Spannring 26 sind so ausgebildet, dass sie eine vor dem Drehlager 25 liegende Labyrinthdichtung bilden. Der Dichtring 28 hat eine radial nach außen abstehende Ringschulter 61, die zusammen mit einer gegenüberliegend an der Schiebebuchse 22 angeordneten Ringschulter 62 einen axialen Verschiebebereich der Schiebebuchse 22 in der Aufnahmeplatte 24 festlegt. Damit ist zusätzlich verhindert, dass das Gegenlager aus der Aufnahmeplatte 24 herausfallen kann.

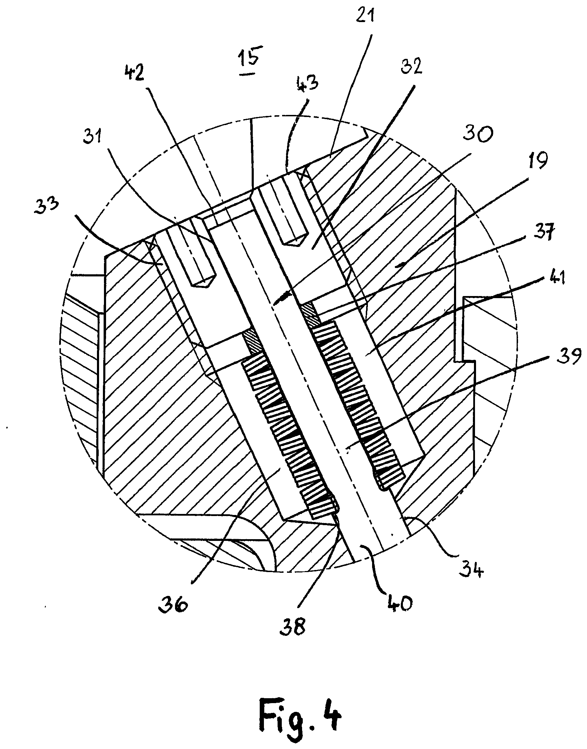

Die Druckanzeige 15 (Fig. 4) hat einen Stößel 30, der mit seinem einen Ende in eine Durchgangsöffnung 31 einer Gewindehülse 32 ragt, die in eine in die Stirnseite 21 des Ringflansches 19 mündende Gewindebohrung 33 geschraubt wird. Vorteilhaft liegt die Stirnseite der Gewindehülse 33 bündig mit der Stirnseite 21 des Ringflansches 19.

Der Stößel 30 ragt in eine Bohrung 34, die im Grundkörper 20 der Lagernabe 6 vorgesehen ist und in die Druckkammer 3 mündet (Fig. 2). Der in der Bohrung 34 liegende Teil des Stößels 30 ist mittels eines Dichtringes 35, vorzugsweise eines O-Ringes, gegen die Wandung der Bohrung 34 abgedichtet (Fig. 2).

Der Stößel 30 ist im Bereich außerhalb der Bohrung 34 von wenigstens einer Druckfeder 36 umgeben, die im Ausführungsbeispiel durch ein Tellerfederpaket gebildet wird, wobei die einzelnen Tellerfedern aufeinander gestapelt und die Stapel gegensinnig zueinander ausgerichtet sind. Das der Gewindehülse 32 zugewandte Ende der Druckfeder 36 ist unter Zwischenlage einer Distanzscheibe 37 an der Gewindehülse 32 abgestützt. Das andere Ende der Druckfeder 36 liegt an einem Absatz 38 an (Fig. 4), der am Übergang von einem im Durchmesser kleineren Stößelteil 39 in einen im Durchmesser größeren Stößelteil 40 gebildet wird.

Die Druckfeder 36 liegt in einem Aufnahmeraum 41, der im Bereich des Ringflansches 19 der Lagernabe 6 vorgesehen ist und größeren Durchmesser hat als die in ihn mündende Bohrung 34 und der sich nach außen hin in der Gewindebohrung 33 fortsetzt.

Die Distanzscheibe 37 dient zum Ausgleich von Federtoleranzen, so dass die noch zu beschreibende Funktion des Stößels 30 jederzeit gewährleistet ist.

Der Stößelteil 40, der in die Bohrung 34 ragt, bildet einen Kolben, der durch das in der Druckkammer 3 befindliche, unter Druck stehende Medium belastet wird.

Wird die Druckkammer 3 mit dem Medium, in der Regel Hydraulikfett, gefüllt und unter Druck gesetzt, wird der Stößel 30 nach außen belastet. Durch die auf den Kolben 40 wirkende Kraft des Druckmediums wird der Stößel 30 so weit verschoben, bis ein Kräftegleichgewicht zwischen der auf den Kolben 40 wirkenden Kraft und der entgegenwirkenden Kraft der Druckfeder 36 besteht. Die Abstimmung der Federkraft ist vorteilhaft so gewählt, dass im gespannten Zustand der Stößel 30 mit seiner Stirnseite 42 bündig mit der Stirnseite 43 der Gewindehülse 32 ist. Dann ist der Druck in der Druckkammer 3 ausreichend hoch, um den Spindelzapfen 2 sicher zu spannen. Da der endseitige Stößelteil 40 abgedichtet in der Bohrung 34 geführt ist, ist eine zuverlässige Druckanzeige durch den Stößel 30 sichergestellt.

Die Druckanzeige kann auch durch eine Markierung am Stößel 30 erfolgen, wie eine Ringnut, eine Markierung und dergleichen.

Der Druckerzeuger 16 hat einen in eine Gewindebohrung 44 geschraubten Gewindestift 55 (Fig. 2), der mit einem Kolben 46 zusammenwirkt, der mittels eines Dichtringes 47 abgedichtet in einem Kolbenraum 48 verschiebbar ist.

Die Gewindebohrung 44 mündet in die Stirnseite 21 des Ringflansches 19 der Lagernabe 6. Mit dem Gewindestift 45 kann der Kolben 46 im Kolbenraum 48 verstellt werden. Der Kolben 46 kann auch lösbar mit dem Gewindestift 45 verbunden oder einstückig mit ihm ausgebildet sein.

In den Boden 49 des Kolbenraumes 48 mündet eine Bohrung 50, die den Kolbenraum 48 mit der Druckkammer 3 verbindet. Die Bohrung 50, die im Grundkörper 20 der Lagernabe 6 vorgesehen ist, hat kleineren Durchmesser als der Kolbenraum 48, der im Wesentlichen im Bereich des Ringflansches 19 vorgesehen ist.

Der Gewindestift 45 ragt vorteilhaft über die Stirnseite 21 des Ringflansches 19, so dass der Gewindestift 45 mit einem entsprechenden Werkzeug bequem verstellt werden kann.

Vorteilhaft überragt die Schiebebuchse 22 den Ringflansch 19 axial so weit, dass die Schiebebuchse 22 den Gewindestift 45 axial überragt. Mit dem Gewindestift 45 wird das in der Druckkammer 3 befindliche Medium unter Druck gesetzt, indem durch Drehen des Gewindestiftes 45 der Kolben 47 nach innen bewegt wird. Das Druckmedium befindet sich nicht nur in der Druckkammer 3, sondern auch in den Bohrungen 34, 50 und im Kolbenraum 48, so dass geringe Verstellwege des Kolbens 46 ausreichen, das Medium unter Druck zu setzen. Durch Drehen des Gewindestiftes 45 beim Spannvorgang wird der Stößel 30 der Druckanzeige 15 aus seiner in Fig. 4 dargestellten Ausgangsstellung gegen die Kraft der Druckfeder 36 so verschoben, dass die Stirnseite 42 des Stößels 30 bündig mit der Stirnseite 43 der Gewindehülse 33 liegt. Da der Gewindestift 45 und die Druckanzeige 15 an der gleichen Stirnseite des Ringflansches 19 vorgesehen sind, kann der Anwender sehr einfach den erforderlichen Spanndruck einstellen, kontrollieren und überwachen.

Zum Befüllen der Druckkammer 3 mit dem Druckmedium dient der Anschluss 18 (Fig. 3), der als Hochdrucknippel ausgebildet ist. Er ist in eine Bohrung 51 eingesetzt, die in einen Boden 52 einer Vertiefung 53 mündet, die in der Stirnseite 21 des Ringflansches 19 der Lagernabe 6 vorgesehen ist. In die Bohrung 51 mündet eine Zuführbohrung 54, die die Bohrung 51 mit der Druckkammer 3 verbindet.

An den Anschluss 18 wird beispielhaft eine Hochdruckfettpresse angeschlossen, über die das unter Druck zu setzende Fett als Druckmedium in die Druckkammer 3 gefüllt wird.

Das Druckablassventil 17 ist ebenfalls in der Stirnseite 21 des Ringflansches 19 vorgesehen. Es dient primär zur Entlüftung bei der Befüllung mit Druckmedium. Mit dem Ventil 17 kann bei Bedarf auch der Druck abgebaut werden, indem beim Öffnen eine geringe Menge an Druckmedium nach außen treten kann.

Bei der Erstbefüllung wird der Gewindestift 45 so weit eingeschraubt, dass der Kolben 46 am Boden 49 des Kolbenraumes 48 anliegt. Über den Anschluss 18 wird mittels der Hochdruckfettpresse das Druckmedium zunächst bei geöffnetem Druckablassventil 17 eingefüllt, bis das System entlüftet, das heißt komplett mit Fett befüllt ist. Danach wird das Druckablassventil 17 geschlossen und das Druckmedium so weit eingefüllt, bis der Stößel 30 mit seiner Stirnseite 42 bündig mit der Stirnseite 43 der Gewindehülse 32 liegt. Hat die Hochdruckfettpresse selbst ein Manometer, dann kann über das Manometer der Druck abgelesen werden. Zum Entspannen kann nun der Gewindestift 45 so weit zurückgedreht werden, bis der Druck abgebaut ist. Die nachfolgenden Spannvorgänge erfolgen immer in der Weise, dass der Gewindestift 45 bis auf Anschlag eingeschraubt wird, womit automatisch der richtige Spanndruck aufgebaut wird. Dieser wird durch die Druckanzeige angezeigt und durch den Bediener kontrolliert.

Der Befüllvorgang kann auch so durchgeführt werden, dass der Gewindestift 45 in seine andere Endlage zurückgeschraubt wird. Die Befüllung mit dem Druckmedium erfolgt in diesem Falle ohne Druckaufbau. Sobald der Befüllvorgang abgeschlossen ist, wird der Gewindestift 45 in die Gewindebohrung 44 geschraubt, so dass der Kolben 46 das Druckmedium unter Druck setzt. Der Gewindestift 45 wird so weit eingeschraubt, bis der korrekte Spanndruck an der Druckanzeige 15 angezeigt wird.

Der Spindelzapfen 2 ist mit einer axialen Mitnehmernut 55 versehen, in die eine Drehmomentmitnahme 56 (Fig. 1) eingreift. Sie ist an der Stirnseite der Lagernabe 6 befestigt.

Mit dem beschriebenen Gegenlager ist eine einfache und schnelle Montage möglich. Zur Druckerzeugung muss lediglich der Gewindestift 45 mit einem entsprechenden Werkzeug gedreht werden, um den Spanndruck in der Druckkammer 3 zu erzeugen. Der Gewindestift 45 ist vorteilhaft als Inbusschraube ausgebildet, die mit einem entsprechenden Schlüssel um ihre Achse gedreht werden kann. Mittels der Druckanzeige 15 lässt sich eine einfache Spannkontrolle vornehmen. Zum Lösen der Spannung wird der Gewindestift 46 mit dem Werkzeug lediglich zurückgedreht. Das Werkzeug zum Drehen des Gewindestiftes 45 kann der Anwender bei sich tragen. Beim Spann- und Lösevorgang tritt kein Druckmedium nach außen, so dass ein sauberes Arbeiten gewährleistet ist.

Eine mögliche Leckage des Druckmediums lässt sich jederzeit durch Nachfüllen des Mediums über den Anschluss 18 ausgleichen, wenn es erforderlich sein sollte.

Geringfügige Leckagen können durch den Stößel 30 ausgeglichen werden. Da er mittels der Druckfeder 36 vorgespannt ist, wird der Stößel 30 bei geringen Leckagen durch die Druckfeder 36 so nachgestellt, dass ein zum sicheren Spannen ausreichender Druck erhalten bleibt.

Das beschriebene Spannsystem stellt ein geschlossenes System dar. Das Druckmedium wird bei der Erstbefüllung mittels einer Hochdruckfettpresse über den Anschluss 18 eingefüllt. Da die Lagernabe 6 die Druckanzeige 15 aufweist, muss die Fettpresse ein Druckmanometer nicht aufweisen, da der korrekte Druck durch die Druckanzeige 15 angezeigt wird. Für die Erstbefüllung des Systems und zur Kontrolle der richtigen Anzeige der Druckanzeige 15 ist allerdings ein Manometer vorteilhaft.

Zum Spannen und Lösen des Spindelzapfens 2 ist nur noch das zum Betätigen des Gewindestiftes 45 erforderliche Werkzeug notwendig, das beispielsweise ein Inbusschlüssel ist. Er kann auch für andere Betätigungen beim Rüsten einer Maschine eingesetzt werden. Dadurch sind zum Rüsten der Maschine nur noch wenige Werkzeuge notwendig.

Durch die Druckanzeige 15 kann jederzeit kontrolliert werden, ob die Spannung mit der gewünschten Spannkraft noch gewährleistet ist. Dies ist täglich und nach jedem Einschalten der Maschine ratsam. Es entfällt hierbei die aufwändige Handhabung einer Fettpresse, mittels derer bisher die noch richtige Spannung kontrolliert werden muss. Dazu muss die Fettpresse jedes Mal an den Anschluss 18 angeschlossen und mit dem gewünschten Druck, der über das Manometer abgelesen werden muss, aufgepumpt werden.

Nicht im Rahmen der Erfindung ist in gleicher Weise möglich, das beschriebene geschlossene System zum Spannen von Werkzeugen auf einer Spindel einzusetzen. In diesem Falle befinden sich die Elemente 15 bis 18 im Grundkörper des Werkzeuges, an dem die zur Bearbeitung von Werkstücken erforderlichen Messer und dgl. befestigt sind.

Da Werkzeuge je nach Drehrichtung in unterschiedlichen Ausrichtungen auf den Bearbeitungsspindeln montiert werden, weisen diese vorteilhaft an beiden Stirnseiten die Druckanzeige 15 und den Druckerzeuger 16 auf, die jeweils mit der Druckkammer 3 verbunden sind. Lange Werkzeuge können auch mit jeweils einer Dehnbuchse an den gegenüberliegenden Seiten ausgeführt sein. Hier sind die Druckkammern 3 der beiden Dehnbuchsen 1 sowie die beidseitigen stirnseitigen Druckanzeigen 15 und Druckerzeuger 16 über Bohrungen im Werkzeuggrundkörper miteinander verbunden, so dass auch hier nur ein geschlossenes System vorhanden ist. Es ist nicht notwendig, den Anschluss 18 zum Befüllen und das Druckablassventil 17 an beiden Stirnseiten vorzusehen. Es ist ausreichend, dies an einer Stirnseite oder vorteilhaft am Umfang des Werkzeuggrundkörpers anzuordnen, da diese nicht für die normale Werkzeugspannung gebraucht werden, sondern nur für die Erstbefüllung und bei Bedarf für eine spätere Nachbefüllung oder Nachkontrolle.

## Patentansprüche

1. Gegenlager zur drehbaren Lagerung einer Bearbeitungsspindel einer Bearbeitungsmaschine, insbesondere Holzbearbeitungsmaschine, vorzugsweise Kehlmaschine, mit wenigstens einer zur Aufnahme eines Spindelzapfens (2) der Bearbeitungsspindel vorgesehenen Dehnbuchse (1), die in einer Lagernabe (6) des Gegenlagers angeordnet ist und deren elastisch verformbare Wand (4) wenigstens eine Druckkammer (3) begrenzt, die ein Druckmedium aufnimmt und in die eine Zuleitung (54) für das Druckmedium mündet,
**dadurch gekennzeichnet, dass** das Gegenlager ein geschlossenes System zum Spannen aufweist, bei welchem in die Druckkammer (3) eine Druckleitung (50) mündet, in der ein mechanisch mittels eines Werkzeuges betätigbares Druckelement (45) sitzt, mit dem ein das Druckmedium beaufschlagender Kolben (46) verschiebbar ist.

2. Gegenlager nach Anspruch 1,
**dadurch gekennzeichnet, dass** das Druckelement (45) in einer Gewindebohrung (44) sitzt.

3. Gegenlager nach Anspruch 1 oder 2,
**dadurch gekennzeichnet, dass** das Druckelement (45) ein Gewindestift ist.

4. Gegenlager nach einem der Ansprüche 1 bis 3,
**dadurch gekennzeichnet, dass** der Kolben (47) abgedichtet in einem Kolbenraum (48) verschiebbar ist.

5. Gegenlager nach einem der Ansprüche 1 bis 4,
**dadurch gekennzeichnet, dass** die Druckkammer (3) mit einer Druckanzeige (15) leitungsverbunden ist.

6. Gegenlager nach Anspruch 4,
**dadurch gekennzeichnet, dass** die Druckanzeige (15) einen Stößel (30) aufweist, der in einer in die Druckkammer (3) mündenden Bohrung (34) sitzt und abgedichtet in der Bohrung (34) verschiebbar ist.

7. Gegenlager nach Anspruch 6,
**dadurch gekennzeichnet, dass** der Stößel (30) in Richtung auf die Drucckammer (3) federbelastet ist.

8. Gegenlager nach Anspruch 6 oder 7,
**dadurch gekennzeichnet, dass** der Stößel (30) von einem Tellerfederpaket (36) umgeben ist, das mit dem einen Ende an einem stößelseitigen Anschlag (38) und mit dem anderen Ende an einem Sicherungsteil (32) abgestützt ist.

9. Gegenlager nach Anspruch 8,
**dadurch gekennzeichnet, dass** das Sicherungsteil (32) eine Gewindehülse ist, die in eine Gewindebohrung (33) geschraubt ist und eine Durchgangsöffnung (31) aufweist, in die der Stößel (30) ragt.

10. Gegenlager nach einem der Ansprüche 1 bis 9,
**dadurch gekennzeichnet, dass** die Druckkammer (3) mit einem Anschluss (18) zum Befüllen der Druckkammer mit dem Druckmedium leitungsverbunden ist.

11. Gegenlager nach einem der Ansprüche 1 bis 10,
**dadurch gekennzeichnet, dass** die Druckkammer (3) mit einem Druckablassventil (17) leitungsverbunden ist.

12. Verfahren zum Spannen eines Gegenlagers auf einer Bearbeitungsspindel einer Bearbeitungsmaschine, insbesondere Holzbearbeitungsmaschine vorzugsweise Kehlmaschine, **dadurch gekennzeichnet, dass** eine von einer elastisch verformbaren Wand (4) begrenzte Druckkammer (3) des Gegenlagers zunächst mit einem Druckmedium gefüllt wird, so dass ein geschlossenes Spannsystem erhalten wird und dass das Druckmedium beim Spannen des Gegenlagers auf der Bearbeitungsspindel mit einem Kolben (46), der mechanisch durch ein Druckelement (45) verschoben wird, unter Druck gesetzt wird, wobei mittels einer Druckanzeige (15) die Einstellung des Spanndruckes angezeigt wird.

13. Verfahren nach Anspruch 12,
**dadurch gekennzeichnet, dass** das Druckelement (45) ein Schraubteil ist.

14. Verfahren nach Anspruch 12 oder 13,
**dadurch gekennzeichnet, dass** die Druckanzeige (15) einen durch das Druckmedium belasteten, als Kolben wirkenden Stößel (30) aufweist, der gegen Federkraft durch das Druckmedium verschoben wird.

## Claims

1. Counterbearing for rotatable mounting of a machining spindle of a machine tool, in particular a woodworking machine, preferably a moulding machine the counterbearing comprising at least one expansion bushing (1) provided for receiving a spindle pin (2) of the machining spindle, which is arranged in a bearing hub (6) of the counterbearing and whose elastically deformable wall (4) delimits at least one pressure chamber (3) which accommodates a pressure medium and into which a supply line (54) for the pressure medium opens, **characterized in that** the counterbearing has a closed system for clamping in which a pressure line (50) opens into the pressure chamber (3), in which pressure line is located a pressure element (45) which can be actuated mechanically by means of a tool (45) by means of which a piston (46) on which the pressure medium acts is displaceable.

2. Counterbearing according to Claim 1, **characterized in that** the pressure element (45) is seated in a threaded bore (44).

3. Counterbearing according to Claim 1 or 2, **characterized in that** the pressure element (45) is a threaded pin.

4. Counterbearing according to one of Claims 1 to 3, **characterized in that** the piston (47) is displaceable in a sealed manner in a piston chamber (48).

5. Counterbearing according to one of Claims 1 to 4, **characterized in that** the pressure chamber (3) is connected by a conduit to a pressure display (15).

6. Counterbearing according to Claim 5, **characterized in that** the pressure display (15) comprises a plunger (30) seated in a bore (34), which opens into the pressure chamber (3) and is displaceable in a sealed manner in the bore (34).

7. Counterbearing according to Claim 6, **characterized in that** the plunger (30) is spring-loaded in the direction of the pressure chamber (3).

8. Counterbearing according to Claim 6 or 7, **characterized in that** the plunger (30) is surrounded by a plate spring stack (36) having one end supported against a stop (38) on the plunger side and the other end supported against a securing part (32).

9. Counterbearing according to Claim 8, **characterized in that** the securing part (32) is a threaded sleeve that is screwed into a threaded bore (33) and has a through opening (31), into which the plunger (30) projects.

10. Counterbearing according to one of Claims 1 to 9, **characterized in that** the pressure chamber (3) is connected by a conduit to a connector (18) for filling the pressure chamber with the pressure medium.

11. Counterbearing according to one of Claims 1 to 10, **characterized in that** the pressure chamber (3) is connected by a conduit to a pressure relief valve (17) .

12. Method for clamping a counterbearing on a machining spindle of machine tool, in particular a woodworking machines, preferably a moulding machine, **characterized in that** a pressure chamber (3) of the counterbearing delimited by an elastically deformable wall (4) is initially filled with a pressure medium, so that a closed clamping system is obtained and the pressure medium is pressurized during clamping of the counterbearing on the machining spindle with a plunger (46) which is mechanically displaced by a pressure element (45) wherein the setting of the clamping pressure is displayed by means of a pressure display (15).

13. Method according to Claim 12, **characterized in that** the pressure element (45) is a screw part.

14. Method according to Claim 12 or 13, **characterized in that** the pressure display (15) comprises a plunger (30) pressurized by the pressure medium acting as a piston which is displaced against a spring force by the pressure medium.

## Revendications

1. Butée, destinée au logement rotatif d'une broche d'usinage d'une machine d'usinage, notamment d'une machine d'usinage du bois, de préférence une moulurière, dotée d'au moins une douille d'expansion (1), prévue pour recevoir un tourillon (2) de la broche d'usinage, qui est placée dans un moyeu porteur (6) de la butée et dont la paroi (4) élastiquement déformable délimite au moins une chambre de pression (3), qui reçoit un fluide sous pression et qui débouche dans une conduite d'alimentation (54) pour le fluide sous pression, **caractérisée en ce que** la butée comporte un système fermé de serrage, sur lequel une conduite sous pression (50) débouche dans la chambre de pression (3), dans laquelle est logé un élément de pression (45) mécaniquement actionnable au moyen d'un outil, à l'aide duquel un piston (46) sollicitant le fluide sous pression est déplaçable.

2. Butée selon la revendication 1,
**caractérisée en ce que** l'élément de pression (45) est logé dans un taraudage (44).

3. Butée selon la revendication 1 ou 2,
**caractérisée en ce que** l'élément de pression (45) est une tige filetée.

4. Butée selon l'une quelconque des revendications 1 à 3, **caractérisée en ce que** le piston (47) est déplaçable en étant étanchéifié dans une chambre de piston (48).

5. Butée selon l'une quelconque des revendications 1 à 4, **caractérisée en ce que** la chambre de pression (3) est reliée par conduite avec un affichage de pression (15).

6. Butée selon la revendication 4,
**caractérisée en ce que** l'affichage de pression (15) comporte un coulisseau (30), qui est logé dans un alésage (34) débouchant dans la chambre de pression (3) et qui est déplaçable de manière étanchéifiée dans l'alésage (34).

7. Butée selon la revendication 6,
**caractérisée en ce que** le coulisseau (30) est contraint par ressort dans la direction vers la chambre de pression (3).

8. Butée selon la revendication 6 ou 7,
**caractérisée en ce que** le coulisseau (30) est entouré d'un bloc de ressorts Belleville (36), qui par l'une extrémité, est soutenu sur une butée (38) du côté coulisseau et par l'autre extrémité est soutenu sur une pièce de sécurité (32).

9. Butée selon la revendication 8,
**caractérisée en ce que** la pièce de sécurité (32) est une douille filetée, qui est vissée dans un taraudage (33) et qui comporte un trou de passage (31) dans lequel saillit le coulisseau (30).

10. Butée selon l'une quelconque des revendications 1 à 9, **caractérisée en ce que** la chambre de pression (3) est reliée par conduite avec un raccord (18), destiné au remplissage de la chambre de pression avec le fluide sous pression.

11. Butée selon l'une quelconque des revendications 1 à 10, **caractérisée en ce que** la chambre de pression (3) est reliée par conduite avec une soupape de décharge (17).

12. Procédé, destiné à serrer une butée sur une broche d'usinage d'une machine d'usinage, notamment une machine d'usinage du bois, de préférence une moulurière, **caractérisé en ce que** l'on remplit d'abord d'un fluide sous pression une chambre de pression (3) de la butée délimitée par une paroi (4) élastiquement déformable, de sorte à obtenir un système de serrage fermé et que lors du serrage de la butée sur la broche d'usinage, le fluide sous pression soit mis sous pression à l'aide d'un piston (46), qui est déplacé mécaniquement par un élément de pression (45), le réglage de la pression de serrage étant affiché au moyen d'un affichage de pression (15).

13. Procédé selon la revendication 12,
**caractérisé en ce que** l'élément de pression (45) est une pièce à visser.

14. Procédé selon la revendication 12 ou 13,
**caractérisé en ce que** l'affichage de pression (15) comporte un coulisseau (30) contraint par le fluide sous pression, agissant en tant que piston, qui contre la force d'un ressort, est déplacé par le fluide sous pression.
